(19) Europäisches Patentamt
European Patent Office
Office européen des brevets

(11) **EP 2 065 683 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(51) Int Cl.:
***G01D 5/245*** *(2006.01)* ***G05B 19/401*** *(2006.01)*

(21) Anmeldenummer: **08012644.4**

(22) Anmeldetag: **12.07.2008**

(54) **Linearführung mit integriertem Linearmotor**

Linear bearing with integrated linear motor

Direction linéaire dotée d'un moteur linéaire intégré

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.11.2007 DE 102007057833**

(43) Veröffentlichungstag der Anmeldung:
**03.06.2009 Patentblatt 2009/23**

(73) Patentinhaber: **ETEL S.A.**
**2112 Môtiers (CH)**

(72) Erfinder:
• **Vaucher, Jean-Marc**
**2108 Couvet (CH)**
• **Coleman, Ralph**
**2114 Fleurier (CH)**
• **Derabasse, Kevin**
**Pittsburg, PA 15215 (US)**

(74) Vertreter: **Pleyer, Hans Anno**
**Dr. Johannes Heidenhain GmbH**
**Patentabteilung**
**Postfach 12 60**
**83292 Traunreut (DE)**

(56) Entgegenhaltungen:
**WO-A1-99/44407      DE-A1- 10 140 174**
**US-A1- 2004 178 327**

**EP 2 065 683 B1**

**Beschreibung**

Die vorliegende Erfindung betrifft eine Linearführung mit integriertem Linearmotor, bei der die Lage des beweglichen Teils quer zur Antriebsrichtung aktiv beeinflussbar ist, etwa um Bahnabweichungen zu korrigieren. Solche Linearführungen dienen zur genauen Positionierung von Objekten.

Vor allem die Fortschritte im Bereich der Mikroelektronik machen es notwendig, dass Objekte wie Wafer oder elektronische Bauteile immer schneller und immer genauer positioniert werden müssen. Soll dabei eine besonders reibungsarme Lagerung der beweglichen Teile erfolgen, ist der Einsatz von luftgelagerten Linearführungen bekannt, bei denen das bewegliche Teil durch ein Luftkissen vom stationären Teil beabstandet gehalten wird. In eine solche Führung kann ein Linearmotor integriert sein, der für den Antrieb in der gewünschten Führungsrichtung sorgt. Nachteilig ist, dass derartige luftgelagerte Führungen quer zur Führungsrichtung nicht besonders steif sind, so dass die Positionierung quer zur Führungsrichtung nicht mit der erforderlichen Genauigkeit durchgeführt werden kann.

Die WO 2007/024031 A1 beschreibt eine Linearführung, bei der eine bewegliche Plattform berührungslos in einem bestimmten Abstand zu einer Fläche linear entlang dieser Fläche geführt wird. Elektromagnete an den vier Ecken der Plattform sorgen dabei einerseits für eine Vorspannung des Lagers, andererseits dienen sie dazu, den Abstand der Plattform von der Fläche konstant zu halten, und damit Abweichungen senkrecht zur Fläche auszugleichen. Eine Abweichung senkrecht zur Führungsrichtung und parallel zur Fläche kann mit diesem System jedoch nicht korrigiert werden.

Die WO 2007/026270 A1 beschreibt einen eisenlosen Linearmotor, dessen Spulen so im Magnetfeld des Stators angeordnet sind, dass sich der Linearmotor als Antrieb für zwei aufeinander senkrecht stehende Richtungen nutzen lässt. Damit lässt sich beispielsweise ein Bestückungsautomat vorteilhaft betreiben.

Aus der DE 102005023984 A1 sind Positionsmessgeräte bekannt, die auf einem Maßstab neben einer Inkrementalspur zur Messung einer Verschiebung in einer Messrichtung eine zusätzliche Inkrementalspur tragen, die kleine Verlagerungen quer zur eigentlichen Messrichtung erfassen können. US 2004/178327 beschreibt eine Linearführung mit einem integrierten Lagemesssystem mit einem Massstab und Abtastköpfen, womit die Lage eines Tisches sowohl in einer Führungsrichtung als auch in einer Abweichungsrichtung quer zur Führungsrichtung erfassbar ist. Aufgabe der Erfindung ist es, eine Linearführung mit integriertem Linearmotor zu schaffen, mit dem ein Objekt besonders genau positioniert werden kann.

Diese Aufgabe wird gelöst durch eine Linearführung mit den Merkmalen von Anspruch 1. Vorteilhafte Ausgestaltungen sind in den Unteransprüchen aufgeführt.

Eine Linearführung mit integriertem Linearmotor weist einen ortsfesten, in Führungsrichtung erstreckten Träger, einen in Führungsrichtung beweglichen Tisch und einen Linearmotor auf, dessen bewegliches Teil mit dem Tisch und dessen ortsfester Teil mit dem Träger verbunden ist. Die Linearführung weist ferner berührungslose Lager zwischen dem Träger und dem Tisch, sowie auf elektromagnetischer Wechselwirkung beruhende Mittel zum Positionieren des Tisches quer zur Führungsrichtung auf. Die Linearführung verfügt zudem über ein integriertes Lagemesssystem mit einem Maßstab und Abtastköpfen, mit dem die Lage des Tisches sowohl in Führungsrichtung als auch in einer Abweichungsrichtung erfassbar ist, die quer zur Führungsrichtung und parallel zu einer Ebene eines Luftspalts des Linearmotors liegt. Die Mittel wirken dabei so, dass der Tisch in Abweichungsrichtung positionierbar ist.

Eine so aufgebaute Führung mit integriertem Linearmotor ermöglicht eine sehr exakte Positionierung in einer ausgedehnten Führungsrichtung, und in gewissen Grenzen auch quer zur Führungsrichtung in der Abweichungsrichtung. Hierdurch können z.B. Führungsfehler quer zur Führungsrichtung kompensiert werden. Da die Führung berührungslos arbeitet, ist die Genauigkeit der Positionierung nicht von der Qualität oder dem Abnutzungsgrad einer Führungsschiene abhängig. Zudem wird kein Abrieb produziert, so dass solche Führungen auch besonders gut für Reinraumanwendungen geeignet sind.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 1   einen Schnitt durch eine Linearführung,

Figur 2   die Linearführung der Figur 1 in Draufsicht,

Figur 3   Prinzipschaubilder zur Herleitung eines Regelungsansatzes, und

Figur 4   ein weiteres Ausführungsbeispiel in räumlicher Darstellung.

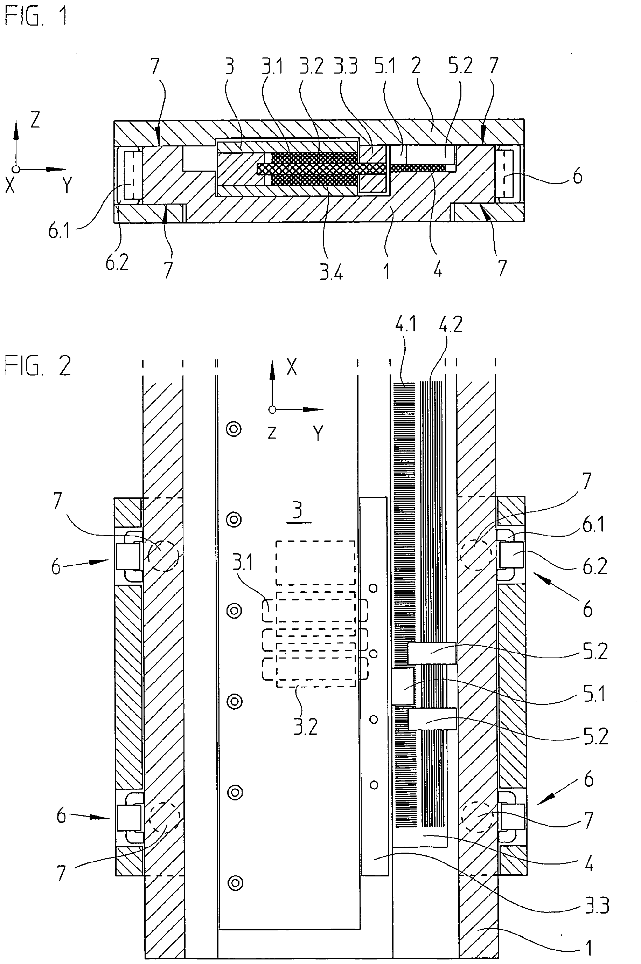

Figur 1 zeigt einen Schnitt durch eine Linearführung mit integriertem Linearmotor gemäß dem ersten Ausführungsbeispiel. Die Führungsrichtung X steht senkrecht auf der Zeichenebene. Die Linearführung weist einen ortsfesten Träger 1 und einen hierzu beweglichen Tisch 2 auf, auf dem die zu bewegende Last befestigt werden kann. In diese Linearführung ist ein eisenloser Linearmotor 3 integriert, der für den Vortrieb des Tisches 2 sorgt. Das Primärteil des Linearmotors 3 mit seinen Spulen 3.1 ist über eine Spulenhalterung 3.3 mit dem Tisch verbunden und daher relativ zum Träger 1 beweglich. Da es sich um einen eisenlosen Linearmotor handelt, sind die Spulen 3.1 nicht um Eisenkerne gewickelt, sondern z.B. in einen flachen Träger aus Kunstharz eingegossen. Durch den Verzicht auf Eisenkerne wird das zu bewegende Gewicht reduziert, so dass der Tisch besser beschleunigt werden kann. Dies ist besonders dann von Vorteil, wenn die zu bewegende Last relativ klein ist, wie z.B. bei einem Bestückungsautomaten für die Elektronikindustrie. In einem eisenlosen Linearmotor wirken außerdem keine Reluktanzkräfte. Dies ist besonders in Verbindung mit einer Luftlagerung von großem Vorteil.

Der Sekundärteil des Linearmotors 3 mit seinen Magneten 3.2 ist mit dem Träger 1 verbunden und so ausgebildet, dass beidseits der Spulen 3.1 Magnete 3.2 angeordnet sind, wobei sich gegenüberliegende Magnete 3. 2 die gleiche Magnetisierungsrichtung aufweisen, aber nebeneinander liegende Magnete 3.2 gegensinnig magnetisiert sind.

Zwischen den Spulen 3.1 und den Magneten 3.2 liegt ein flächiger Luftspalt 3.4. Parallel zu dieser Ebene dieses Luftspalts 3.4 liegen senkrecht aufeinander stehend die Führungsrichtung X und die Abweichungsrichtung Y.

Der Tisch 2 umgreift den Träger 1 an beiden Seiten der Linearführung, so dass zwischen dem Träger 1 und dem Tisch 2 Luftlager 7 so angeordnet werden können, dass diese sich gegenseitig vorspannen. In der Schnittdarstellung der Figur 1 erkennt man vier Luftlager 7, von denen sich je zwei so in Z-Richtung gegenüberliegen, dass sie sich gegenseitig belasten. Auf diese Weise kann ein ruhiger Lauf des Tisches 2 entlang des Trägers 1 sichergestellt werden.

Die Linearführung ist so ausgelegt, dass die vom Linearmotor 3 auf das bewegliche Teil (2, 3.1, 3.3) ausgeübte Kraft in dessen Schwerpunkt angreift. So wird beim Beschleunigen und Bremsen kein Drehmoment erzeugt, es wirken dann keine Kräfte auf die Luftlager 7.

In den seitlichen Umgriffen des Tisches sind außerdem Magnetlager 6 angeordnet, bei denen es sich um Elektromagnete mit je einem hufeisenförmigen Joch 6.1 und einer um das Joch gewickelten Spule 6.2 handelt. Diese Magnetlager 6 können anziehende Kräfte zwischen dem Träger 1 und dem Tisch 2 bewirken. Indem je zwei solcher Magnetlager 6 in Y-Richtung gegenüber angeordnet sind, lässt sich der Tisch in Y-Richtung und damit quer zur Führungsrichtung X in der Tischebene X-Y ein wenig verschieben.

In der Figur 2 (ein Schnitt unterhalb der Tischplatte) erkennt man, dass zwei Paare von solchen Magnetlagern 6 in X-Richtung versetzt vorhanden sind, so dass sich der Tisch 1 auch ein wenig um die Z-Achse drehen lässt.

In der Figur 2 erkennt man auch die Anordnung der Luftlager 7, wobei in dieser Ansicht vier Paare von sich jeweils gegenseitig belastenden Luftlagern 7 dargestellt sind. Im dargestellten Ausführungsbeispiel kommen also vier Magnetlager 6 und acht Luftlager 7 zum Einsatz. Die Zahl der Magnet- und Luftlager kann natürlich den jeweiligen Gegebenheiten angepasst werden. Insbesondere können viele Luftaustrittsdüsen über größere Flächen verteilt werden.

Die in den Figuren 1 und 2 dargestellte Linearführung weist drei Freiheitsgrade auf, die mit geeigneten Regelkreisen sehr genau eingestellt werden können. So lässt sich der Tisch 2 natürlich mit dem Linearmotor 3 in Führungsrichtung X verschieben. Zusätzlich lässt sich der Tisch 2 aber auch quer zur Führungsrichtung X (also in Y-Richtung) verschieben, und zusätzlich auch um eine Achse senkrecht zum Tisch (also um die Z-Achse) drehen. Der erste Freiheitsgrad (Translation in X) dient der eigentlichen Anwendung, die beiden zusätzlichen regelbaren Freiheitsgrade (Translation in Y, Rotation um Z) dienen z.B. dazu, Fehler in der Mechanik der Anordnung auszugleichen, die sich ansonsten auf die Positionierung auswirken könnten: Ein am Rand des Tisches 2 angeordnetes Werkzeug bewegt sich auch in X-Richtung, wenn sich der Tisch um eine mittig angeordnete Z-Achse dreht. Eine Vermeidung solcher Drehungen verbessert also die Positionierung in X-Richtung.

Die beiden zusätzlichen Freiheitsgrade können aber auch zum Positionieren des Tisches 2 verwendet werden. Es sind zwar keine großen Wege möglich, doch in manchen Applikationen kann schon eine zusätzliche Bewegungsmöglichkeit in Abweichungsrichtung Y von einigen Mikrometern bzw. bei der Rotation um die Richtung Z von einigen Bogenminuten nützlich sein. Ein Beispiel für eine solche Applikation wäre eine Station zum Inspizieren eines Wafers während der Fertigung von integrierten Schaltkreisen unter einem Mikroskop. Die zusätzlichen Freiheitsgrade erlauben hier das exakte Ausrichten eines mechanisch vorjustierten Wafers.

Für die Regelkreise zum Positionieren des Tisches 2 sind Lageinformationen notwendig, die von einem speziellen, in die Linearführung integrierten Lagemesssystem gewonnen werden. So ist mit dem Träger 1 verbunden ein Maßstab 4 mit zwei Spuren 4.1 und 4.2. Bei der ersten Spur 4.1 handelt es sich um eine herkömmliche Inkrementalspur, deren Teilungsstriche quer zur Führungsrichtung X in Richtung Y verlaufen. Durch Abtasten und Abzählen dieser Teilungsstriche mittels eines Abtastkopfes 5.1 und ggf. durch Interpolation lässt sich die Lage des Tisches 2 in X-Richtung sehr genau feststellen und damit in eine Sollposition regeln.

Die zweite Spur 4.2 des Maßstabes 4 ist eine so genannte Geradheitsspur, deren Teilungsstriche im Wesentlichen parallel zur Führungsrichtung X liegen. Die Vorteile einer kleinen Abweichung von dieser Parallelität und andere vorteilhafte Ausgestaltungen solcher Maßstäbe erklärt die einleitend erwähnte DE 102005023984 A1, auf deren Inhalt diesbezüglich ausdrücklich Bezug genommen wird.

Anhand der Geradheitsspur 4.2 lässt sich die Lage des Tisches 2 in Y-Richtung ermitteln. Verwendet man zur Abtastung der Geradheitsspur 4.2 zwei in Führungsrichtung X gegeneinander versetzte Abtastköpfe 5.2 zur Positionswertbildung, so erhält man durch Mittelung der beiden ermittelten Positionen die Verschiebung des Tisches 2 quer zur Führungsrichtung X. Durch Differenzbildung lässt sich auf die Drehung des Tisches 2 um die Z-Achse schließen. Alle Abtastköpfe 5.1, 5.2 sind mit dem Tisch 2 verbunden und damit beweglich gegenüber dem Maßstab 4 gelagert.

Somit können durch geeignete Ansteuerung der Magnetlager 4 sowohl die lineare Verschiebung des Tisches 2 in Y-Richtung als auch eine Drehung des Tisches 2 um eine Z-Achse kompensiert und auf Null oder einen anderen gewünschten Wert (wegen der eingeschränkten Bewegungsfreiheit nahe Null) geregelt werden.

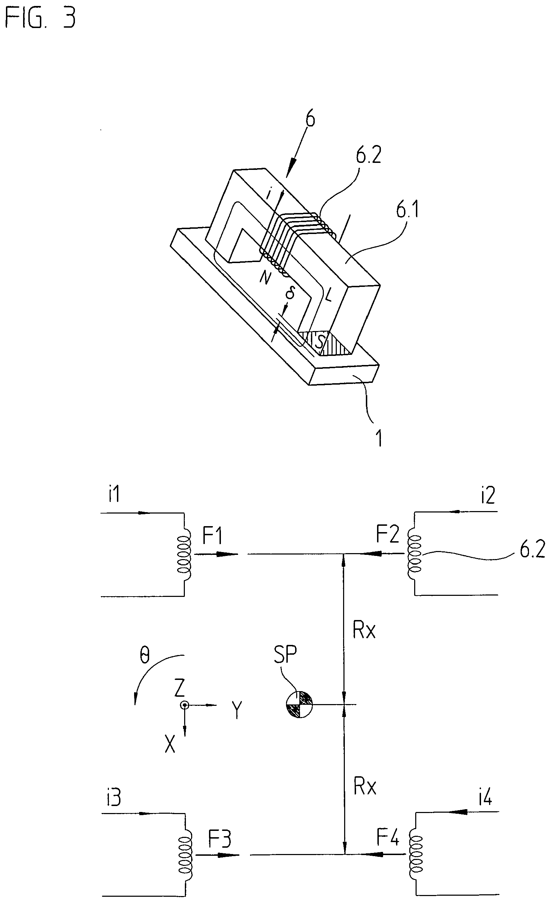

Die für die Herleitung eines Regelungsansatzes wichtigen Größen sind in der Figur 3 dargestellt. Um diese Ansteuerung zu vereinfachen, sind die vier Magnetlager 6 (wie in Figur 2 und in der linken Hälfte der Figur 3 angedeutet) symmetrisch bezüglich des Schwerpunkts SP des Tisches 2 angeordnet. Rx ist der Abstand zwischen den Magnetlagern 6 und dem Schwerpunkt SP in Führungsrichtung, der Luftspalt zwischen dem Joch 6.1 eines Magnetlagers und dem Träger 1 ist mit $\delta$ bezeichnet.

Jedes Magnetlager erzeugt eine Kraft F1, F2, F3, F4, die näherungsweise mit der Formel (1) berechnet werden kann. Es werden die in der Figur 3 gezeigten Größen verwendet.

$$F_k = \frac{\mu_0 S}{\left(L/\mu_r + 2\delta_k\right)^2} \cdot \left(Ni_k\right)^2 = \alpha \cdot \frac{i_k^2}{\left(\beta + 2\delta_k\right)^2} \qquad (1)$$

In Formel (1) ist $\mu_r$ die relative Permeabilität von Eisen, N ist die Anzahl der Windungen der Spule 6.2, L ist die Länge des über das Joch 6.1 geschlossenen magnetischen Kreises, S ist die Austrittsfläche des Magnetfeldes am Joch 6.1, $\alpha$ und $\beta$ sind Konstanten. Kennt man die Position des Tisches bezüglich y und $\theta$ (diese Information erhält man wie oben erklärt aus der Abtastung der Geradheitsspur 4.2 des Maßstabes 4 mit zwei Abtastköpfen 5.2), können die Luftspalte der vier Magnetlager gemäß Formel (2) berechnet werden:

$$\begin{cases} \delta_1 = \delta_0 - y + R_x\theta \\ \delta_2 = \delta_0 + y - R_x\theta \\ \delta_3 = \delta_0 - y - R_x\theta \\ \delta_4 = \delta_0 + y + R_x\theta \end{cases} \qquad (2)$$

In Formel (2) ist $\delta_0$ der nominale Luftspalt, der durch die Konstruktion für den Fall y = 0 und $\theta$ = 0 festgelegt ist.

Die Bewegungsgleichungen (3) des Systems können berechnet werden, wenn man die an jedem Magnetlager 6 wirkenden Kräfte betrachtet, die von der Position des Tisches 2 und den in den Spulen 6.2 der Magnetlager 6 fließenden Strömen i1, i2, i3, i4 abhängen.

$$\begin{cases} J \cdot \ddot{\theta} = R_x\left(F_2 - F_1 + F_3 - F_4\right) \\ m \cdot \ddot{y} = F_1 - F_2 + F_3 - F_4 \end{cases} \qquad (3)$$

Zwei Freiheitsgrade müssen mit vier Sollströmen geregelt werden. Die Gleichung (4) reduziert die Anzahl der Sollströme:

$$\begin{cases} i_1 = I_0 - i_\theta + i_y \\ i_2 = I_0 + i_\theta - i_y \\ i_3 = I_0 + i_\theta + i_y \\ i_4 = I_0 - i_\theta - i_y \end{cases} \qquad (4)$$

Dabei ist $I_0$ der Strom zur Vorbelastung der Magnetlager. Dieser Strom kann auch Null sein, wenn statt dessen Permanentmagnete verwendet werden. Auf diese Weise wird die Anzahl der Sollströme auf zwei ($i_\theta$ and $i_y$) reduziert. Mit diesen kann die Lage des Tisches eingestellt werden.

Aufgrund des instabilen und nicht-linearen Verhaltens solcher Magnetlager 6 werden komplexe Reglerstrukturen benötigt, wie sie schon länger im Bereich der Magnetlagerung verwendet werden. Diese Reglerstrukturen sind nicht Gegenstand der vorliegenden Erfindung und werden hier nicht näher dargestellt.

Es sei an dieser Stelle erwähnt, dass das erste Ausführungsbeispiel abgewandelt werden kann, indem auf die Magnetlager 6 verzichtet wird, und statt dessen eine Anordnung gemäß der eingangs zitierten WO 2007/026270 A1 gewählt wird. Der Linearmotor weist dabei zwei hintereinander angeordnete eisenlose Primärteile auf, die getrennt ansteuerbar sind. Dabei ist es wichtig, dass Bereiche der Spulen des Linearmotors, die in Führungsrichtung verlaufen, zwischen den Magneten angeordnet sind (in der Figur 2 sind Spulen 3.1 und Magnete 3.2 angedeutet, hier liegen alle diese Bereiche außerhalb der Magnete). Die Lorentzkraft, die auf die in diesen Spulenbereichen bewegten Ladungen wirkt, erlaubt eine Positionierung, wie sie zuvor mit den Magnetlagern 6 ermöglicht wurde. Der Tisch kann so von jedem Primärteil in Führungsrichtung X und in Abweichungsrichtung Y bewegt und positioniert werden. Durch gegensinnige Ansteuerung der beiden Primärteile kann eine Drehung des Tisches um die Achse Z bewirkt werden. Die mit dieser Variante möglichen Bewegungen in den zusätzlichen Freiheitsgraden können deutlich größer sein (einige Millimeter bzw. einige Grad) als im ersten Ausführungsbeispiel.

Diese Variante des ersten Ausführungsbeispiels hat mit der zuvor beschriebenen Variante mit Magnetlagern gemeinsam, dass auf elektromagnetischer Wechselwirkung beruhende Mittel zum Positionieren des Tisches 2 in anderen als der Führungsrichtung X vorhanden sind.

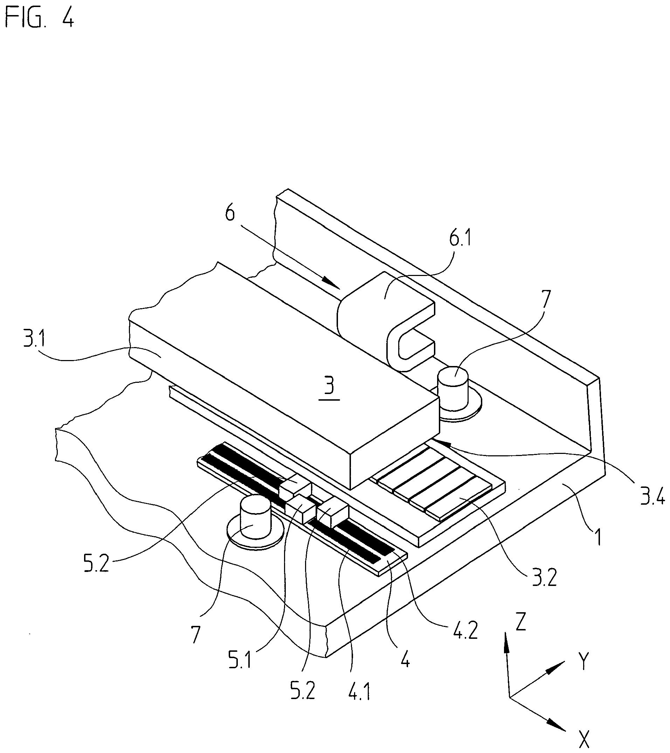

Figur 4 zeigt ein weiteres Ausführungsbeispiel, bei dem ein eisenbehafteter Linearmotor zum Einsatz kommt, dessen Spulen im Primärteil um die Zähne eines Eisenkerns gewickelt sind. Solcher Linearmotoren weisen eine größere Masse auf, können aber auch deutlich höhere Kräfte zum Bewegen von schwereren Lasten erzeugen.

In der Figur 4 sind nur die wesentlichen Bestandteile dargestellt. Der Tisch ist nicht dargestellt, um den Blick auf die wichtigeren Bestandteile zu ermöglichen. Auf dem Träger 1 ist das Sekundärteil des Linearmotors mit seinen Magneten 3.2 befestigt. Zwischen dem Primärteil und dem Sekundärteil liegt ein flächiger Luftspalt 3.4. Parallel zum Sekundärteil ist der Maßstab 4 mit seinen beiden Spuren 4.1 und 4.2 am Träger befestigt. Sekundärteil und Maßstab sind in Führungsrichtung X erstreckt. Oberhalb des Sekundärteils befindet sich das Primärteil, in dem die Spulen 3.1 des Linearmotors 3 und dessen Eisenkern enthalten sind. Oberhalb des Maßstabs 4 sind 3 Abtastköpfe 5.1, 5.2 angeordnet. Maßstab 4 und Abtastköpfe 5.1, 5.2 wirken wie im ersten Ausführungsbeispiel zusammen.

Luftlager 7 halten den nicht dargestellten Tisch beabstandet vom Träger 1. Für die Vorspannung der Luftlager sorgt diesmal die magnetische Anziehungskraft zwischen den Magneten 3.2 der Sekundärteils und dem Eisenkern des Primärteils, so dass hier nur vier Luftlager benötigt werden. Die Anziehungskraft zwischen Primär- und Sekundärteil eines eisenbehafteten Linearmotors hängt allerdings vom Betriebszustand ab. Schwankt die Anziehungskraft zu sehr, können zusätzliche Maßnahmen wie zusätzliche Permanentmagnete oder Vakuum-Saugteller notwendig sein, um die Luftlager vorzuspannen.

Für die seitliche Positioniermöglichkeit sorgen wieder Magnetlager 6, von denen nur ein Joch 6.1 dargestellt ist, das auf eine Seitenwand des Trägers 1 ausgerichtet ist. Das Primärteil des Linearmotors 3, die Abtastköpfe 5.1, 5.2 und die Magnetlager 6 sind mit dem beweglichen Tisch der Linearführung verbunden. Die Funktionsweise dieser Anordnung entspricht ansonsten der des ersten Ausführungsbeispiels.

**Patentansprüche**

1. Linearführung mit integriertem Linearmotor mit einem ortsfesten, in Führungsrichtung (X) erstreckten Träger (1) und einem in Führungsrichtung (X) beweglichen Tisch (2), einem Linearmotor (3) dessen bewegliches Teil (3.1) mit dem Tisch (2) und dessen ortsfester Teil (3.2) mit dem Träger (1) verbunden ist, mit berührungslosen Lagern (7) zwischen dem Träger (1) und dem Tisch (2), sowie mit auf elektromagnetischer Wechselwirkung beruhenden Mitteln (6) zum Positionieren des Tisches (2) quer zur Führungsrichtung (X), wobei die Linearführung ein integriertes Lagemesssystem mit einem Maßstab (4) und Abtastköpfen (5.1,5.2) aufweist, mit dem die Lage des Tisches (2) sowohl in Führungsrichtung (X) als auch in einer Abweichungsrichtung (Y) erfassbar ist, die quer zur Führungsrichtung (X) und parallel zu einer Ebene eines Luftspalts (3.4) des Linearmotors (3) liegt, wobei die Mittel (6) so wirken, dass der Tisch (2) in Abweichungsrichtung (Y) positioniert wird.

2. Linearführung nach Anspruch 1, in welcher der Maßstab (4) eine erste Inkrementalteilung (4.1) aufweist, deren Teilungsstrukturen quer zur Führungsrichtung (X) liegen, und eine zweite Inkrementalteilung (4.2) aufweist, deren Teilungsstrukturen im Wesentlichen parallel zur Führungsrichtung (X) liegen.

3. Linearführung nach Anspruch 2, in welcher die zweite Inkrementalteilung (4.2) von zwei voneinander in Führungsrichtung (X) beabstandeten Abtastköpfen (5.2) abgetastet wird, so dass sowohl der Versatz des Tisches (2) in Abweichungsrichtung (Y) als auch eine Drehung des Tisches um eine Achse (Z) senkrecht zur Ebene des Luftspalts (3.4) messbar und damit auf einen Sollwert regelbar ist.

4. Linearführung nach einem der vorhergehenden Ansprüche, in welcher der Linearmotor (3) ein mit Spulen (3.1) bestücktes eisenloses Primärteil (3.1) aufweist, das über eine Spulenhalterung (3.3) mit dem Tisch verbunden ist, und dass der Linearmotor (3) ein mit Magneten (3.2) versehenes Sekundärteil aufweist, das mit dem Träger (1) verbunden ist, wobei die Spulen (3.1) und Magnete (3.2) miteinander wechselwirken, um den Tisch in Führungsrichtung (X) zu bewegen und zu positionieren.

5. Linearführung nach Anspruch 4, in welcher der Tisch (2) von mehreren sich gegenseitig vorspannenden Luftlagern (7) berührungslos gegenüber dem Träger (1) geführt wird.

6. Linearführung nach Anspruch 4 oder 5, in welcher die Mittel zum Positionieren des Tisches (2) quer zur Führungsrichtung (X) Magnetlager (6) umfassen, die aus jeweils einem Joch (6.1) und einer Spule (6.2) gebildet sind, und die jeweils eine anziehende Kraft in Abweichungsrichtung (Y) zwischen dem Träger (1) und dem Tisch (2) bewirken.

7. Linearführung nach Anspruch 6, in welcher die Magnetlager (6) so angeordnet sind, dass der Tisch (2) in Abweichungsrichtung (Y) verschiebbar und um eine Achse (Z) senkrecht zur Ebene des Luftspalts (3.4) drehbar ist.

8. Linearführung nach Anspruch 4, in welcher der Linearmotor (3) zwei mit dem Tisch (2) verbundene, getrennt ansteuerbare eisenlose Primärteile (3.1) aufweist, die so gegenüber den Magneten (3.2) des Sekundärteils angeordnet sind, dass der Tisch (2) von jedem Primärteil (3.1) in Führungsrichtung (X) und in Abweichungsrichtung (Y) bewegt und positioniert werden kann.

9. Linearführung nach Anspruch 8, in welcher durch gegensinnige Ansteuerung der beiden Primärteile (3.1) eine Drehung des Tisches (2) um eine Achse (Z) senkrecht zur Ebene des Luftspalts (3.4) bewirkt werden kann.

10. Linearführung nach einem der Ansprüche 1 - 3, in welcher der Linearmotor (3) ein mit Spulen bestücktes Primärteil (3.1) aufweist, bei dem die Spulen um einen Eisenkern gewickelt sind, wobei das Primärteil (3.1) mit dem Tisch verbunden ist, und dass der Linearmotor (3) ein mit Magneten (3.2) versehenes Sekundärteil aufweist, das mit dem Träger (1) verbunden ist, wobei die Spulen und Magnete (3.2) miteinander wechselwirken, um den Tisch in Führungsrichtung (X) zu bewegen und zu positionieren.

11. Linearführung nach Anspruch 10, in welcher der Tisch (2) von mehreren Luftlagern (7) berührungslos gegenüber dem Träger (1) geführt wird, wobei die Luftlager (7) durch die Anziehungskraft zwischen den Magneten (3.2) und dem Eisenkern des Primärteils (3.1) vorgespannt werden.

12. Linearführung nach Anspruch 10 oder 11, in welcher die Mittel zum Positionieren des Tisches (2) quer zur Führungsrichtung (X) Magnetlager (6) umfassen, die aus jeweils einem Joch (6.1) und einer Spule (6.2) gebildet sind, und die jeweils eine anziehende Kraft in Abweichungsrichtung (Y) zwischen dem Träger (1) und dem Tisch (2) bewirken.

13. Linearführung nach Anspruch 12, in welcher die Magnetlager (6) so angeordnet sind, dass der Tisch (2) in Abweichungsrichtung (Y) verschiebbar und um eine Achse (Z) senkrecht zur Ebene des Luftspalts (3.4) drehbar ist.

**Claims**

1. Linear guide comprising an integrated linear motor having a fixed carrier (1) extending in the guide direction (X) and a table (2) movable in the guide direction (X), a linear motor (3), the movable part (3.1) of which is connected to the table (2) and the fixed part (3.2) of which is connected to the carrier (1), comprising contactless bearings (7) between the carrier (1) and the table (2), and means (6) based on electromagnetic interaction for positioning the table (2) transversely to the guide direction (X), wherein the linear guide has an integrated location measuring system comprising a scale (4) and scanning heads (5.1, 5.2), using which the location of the table (2) is detectable both in the guide direction (X) and also in a deviation direction (Y), which lies transversely to the guide direction (X) in parallel to a plane of an air gap (3.4) of the linear motor (3), wherein the means (6) act so that the table (2) is positioned in the deviation direction (Y).

2. Linear guide according to Claim 1, in which the scale (4) has a first incremental index (4.1), the index structures of which lie transverse to the guide direction (X), and a second incremental index (4.2), the index structures of which lie essentially parallel to the guide direction (X).

3. Linear guide according to Claim 2, in which the second incremental index (4.2) is scanned by two scanning heads (5.2) spaced apart from one another in the guide direction (X), so that both the offset of the table (2) in the deviation direction (Y) and also a rotation of the table about an axis (Z) perpendicular to the plane of the air gap (3.4) is measurable and therefore controllable to a setpoint value.

4. Linear guide according to any one of the preceding claims, in which the linear motor (3) has an iron-free primary part (3.1) equipped with coils (3.1), which is connected via a coil mount (3.3) to the table, and the linear motor (3) has a secondary part provided with magnets (3.2), which is connected to the carrier (1), wherein the coils (3.1) and magnets (3.2) interact with one another to move and position the table in the guide direction (X).

5. Linear guide according to Claim 4, in which the table (2) is guided in a contactless manner in relation to the carrier (1) by multiple mutually pretensioned air bearings (7).

6. Linear guide according to Claim 4 or 5, in which the means for positioning the table (2) transversely to the guide direction (X) comprise magnetic bearings (6), which are each formed from a yoke (6.1) and a coil (6.2), and which each cause an attractive force in the deviation direction (Y) between the carrier (1) and the table (2).

7. Linear guide according to Claim 6, in which the magnetic bearings (6) are arranged so that the table (2) is displaceable in the deviation direction (Y) and is rotatable about an axis (Z) perpendicular to the plane of the air gap (3.4).

8. Linear guide according to Claim 4, in which the linear motor (3) has two iron-free primary parts (3.1), which are connected to the table (2) and are separately controllable, and which are arranged in relation to the magnets (3.2) of the secondary part so that the table (2) can be moved and positioned by each primary part (3.1) in the guide direction (X) and in the deviation direction (Y).

9. Linear guide according to Claim 8, in which a rotation of the table (2) about an axis (Z) perpendicular to the plane of the air gap (3.4) can be caused by opposing activation of the two primary parts (3.1).

10. Linear guide according to any one of Claims 1 to 3, in which the linear motor (3) has a primary part (3.1) equipped with coils, in which the coils are wound about an iron core, wherein the primary part (3.1) is connected to the table, and the linear motor (3) has a secondary part provided with magnets (3.2), which is connected to the carrier (1), wherein the coils and magnets (3.2) interact with one another to move and position the table in the guide direction (X).

11. Linear guide according to Claim 10, in which the table (2) is guided by multiple air bearings (7) in a contactless manner in relation to the carrier (1), wherein the air bearings (7) are pretensioned by the attraction force between the magnets (3.2) and the iron core of the primary part (3.1).

12. Linear guide according to Claim 10 or 11, in which the means for positioning the table (2) transversely to the guide direction (X) comprise magnetic bearings (6), which are each formed from a yoke (6.1) and a coil (6.2), and which each cause an attractive force in the deviation direction (Y) between the carrier (1) and the table (2).

13. Linear guide according to Claim 12, in which the magnetic bearings (6) are arranged so that the table (2) is displaceable in the deviation direction (Y) and is rotatable about an axis (Z) perpendicular to the plane of the air gap (3.4).

**Revendications**

1. Guide linéaire à moteur linéaire intégré et présentant
un support (1) fixe qui s'étend dans la direction de guidage (X) et une table (2) mobile dans la direction de guidage (X),
un moteur linéaire (3) dont la partie mobile (3.1) est reliée à la table (2) et la partie fixe (3.2) au support (1),
des paliers sans contact (7) entre le support (1) et la table (2) ainsi que des moyens (6) utilisant une interaction électromagnétique pour positionner la table (2) transversalement par rapport à la direction de guidage (X),
le guide linéaire présentant un système intégré de mesure de position présentant une échelle de mesure (4) et des têtes de palpage (5.1, 5.2) et par lequel la position de la table (2) peut être saisie tant dans la direction de guidage (X) que dans une direction d'écart (Y) transversale par rapport à la direction de guidage (X) et parallèle au plan de l'entrefer (3.4) du moteur linéaire (3), les moyens (6) agissant de telle sorte que la table (2) soit positionnée dans la direction d'écart (Y).

**2.** Guide linéaire selon la revendication 1, dans lequel l'échelle de mesure (4) présente une première division incrémentielle (4.1) dont les structures de division sont disposées transversalement par rapport à la direction de guidage (x) et une deuxième division incrémentielle (4.2) dont les structures de division sont situées essentiellement en parallèle à la direction de guidage (X).

**3.** Guide linéaire selon la revendication 2, dans lequel la deuxième division incrémentielle (4.2) est palpée par deux têtes de palpage (5.2) disposées à distance l'une de l'autre dans la direction de guidage (X) de telle sorte que tant le décalage de la table (2) dans la direction d'écart (Y) qu'une rotation de la table autour d'un axe (Z) perpendiculaire au plan de l'entrefer (3.4) puisse être mesurés et ainsi régulés à une valeur de consigne.

**4.** Guidage linéaire selon l'une des revendications précédentes, dans lequel le moteur linéaire (3) présente une partie primaire (3.1) sans noyau de fer, dotée de bobines (3.1), reliée à la table par un support (3.3) de bobines, le moteur linéaire (3) présentant une partie secondaire dotée d'aimants (3.2) et reliée au support (1), les bobines (3.1) et les aimants (3.2) interagissant mutuellement pour déplacer et positionner la table dans la direction de guidage (X) .

**5.** Guide linéaire selon la revendication 4, dans lequel la table (2) est guidée par rapport au support (1) sans contact par l'intermédiaire de plusieurs paliers pneumatiques (7) se contraignant mutuellement.

**6.** Guide linéaire selon les revendications 4 ou 5, dans lequel les moyens de positionnement de la table (2) transversalement par rapport à la direction de guidage (X) comprennent des paliers magnétiques (6) qui sont formés chacun d'une culasse (6.1) et d'une bobine (6.2) et qui exercent chacun une force d'attraction entre le support (1) et la table (2) dans la direction d'écart (Y).

**7.** Guide linéaire selon la revendication 6, dans lequel les paliers magnétiques (6) sont disposés de telle sorte que la table (2) puisse se déplacer dans la direction d'écart (Y) et puisse tourner autour d'un axe (Z) perpendiculaire au plan de l'entrefer (3.4).

**8.** Guide linéaire selon la revendication 4, dans lequel le moteur linéaire (3) présente deux parties primaires (3.1) sans induit, reliées à la table (2) et aptes à être commandées séparément, disposées par rapport aux aimants (3.2) de la partie secondaire de telle sorte que la table (2) puisse être déplacée et positionnée par chaque partie primaire (3.1) dans la direction de guidage (X) et dans la direction d'écart (Y) .

**9.** Guide linéaire selon la revendication 8, dans lequel par commande en sens opposés des deux parties primaires (3.1), une rotation de la table (2) autour d'un axe (Z) perpendiculaire au plan de l'entrefer (3.4) peut être obtenue.

**10.** Guide linéaire selon l'une des revendications 1 à 3, dans lequel le moteur linéaire (3) présente une partie primaire (3.1) dotée de bobines, les bobines étant enroulées autour d'un noyau en fer, la partie primaire (3.1) étant reliée à la table, le moteur linéaire (3) présentant une partie secondaire dotée d'aimants (3.2) et reliée au support (1), les bobines (3.1) et les aimants (3.2) interagissant mutuellement pour déplacer et positionner la table dans la direction de guidage (X).

**11.** Guide linéaire selon la revendication 10, dans lequel la table (2) est guidée sans contact par rapport au support (2) par l'intermédiaire de plusieurs paliers pneumatiques (7), les paliers pneumatiques (7) étant précontraints par la force d'attraction entre les aimants (3.2) et le noyau en fer de la partie primaire (3.1).

**12.** Guide linéaire selon les revendications 10 ou 11, dans lequel les moyens de positionnement de la table (2) transversalement par rapport à la direction de guidage (X) comprennent des paliers magnétiques (6) qui sont formés chacun d'une culasse (6.1) et d'une bobine (6.2) et qui exercent chacun une force d'attraction entre le support (1) et la table (2) dans la direction d'écart (Y).

**13.** Guide linéaire selon la revendication 12, dans lequel les paliers magnétiques (6) sont disposés de telle sorte que la table (2) puisse se déplacer dans la direction d'écart (Y) et puisse tourner autour d'un axe (Z) perpendiculaire au plan de l'entrefer (3.4).

FIG. 1

FIG. 2

EP 2 065 683 B1

FIG. 3

FIG. 4

**EP 2 065 683 B1**

**IN DER BESCHREIBUNG AUFGEFÜHRTE DOKUMENTE**

**In der Beschreibung aufgeführte Patentdokumente**

- WO 2007024031 A1
- WO 2007026270 A1
- DE 102005023984 A1
- US 2004178327 A